# EUROPÄISCHE PATENTSCHRIFT

(11) **EP 1 490 621 B1**
(45) Veröffentlichungstag und Bekanntmachung des Hinweises auf die Patenterteilung: **14.02.2007**
(21) Anmeldenummer: 03743322.4
(22) Anmeldetag: 21.02.2003
(51) Int. Cl.: F16L 41/08, B23K 1/00, F01N 3/28

(54) **VERFAHREN ZUM HERSTELLEN EINES WABENKÖRPERS MIT EINEM FLANSCHSTÜCK FÜR EINEN MESSFÜHLER UND ENTSPRECHENDER WABENKÖRPER**
METHOD FOR THE PRODUCTION OF A HONEYCOMB BODY WITH A FLANGE PIECE FOR A SENSOR AND CORRESPONDING HONEYCOMB BODY
PROCEDE DE PRODUCTION D'ON CORPS EN NID-D'ABEILLES COMPORTANT UNE PIECE DE BRIDE POUR UN CAPTEUR, ET CORPS A NID-D'ABEILLES CORRESPONDANT

(30) Priorität: 01.03.2002 DE 10208872
(43) Veröffentlichungstag der Anmeldung: 29.12.2004
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); ALTHÖFER, Kait, 51674 Wiehl (DE)
(74) Vertreter: Rössler, Matthias
(86) Internationale Anmeldenummer: PCT/EP2003/001801
(87) Internationale Veröffentlichungsnummer: WO 2003/074925

(56) Entgegenhaltungen:
- DE-A- 3 116 967
- DE-C- 19 735 247
- DE-U- 8 816 154
- US-A- 5 071 174
- US-A- 5 280 971

## Beschreibung

Die Erfindung bezieht sich auf ein Verfahren zum Herstellen eines Wabenkörpers mit einer Wabenstruktur, einem Mantelrohr und einem Flanschstück für einen Messfühler sowie einen Wabenkörper mit einem Flanschstück für einen Messfühler.

Im Automobilbau werden Wabenkörper häufig als Katalysator-Trägerkörper im Rahmen einer Anlage zur katalytischen Umsetzung des Verbrennungsabgases eines Verbrennungsmotors eingesetzt. Im Rahmen der sich ständig verschärfenden gesetzlichen Grenzwerte für die zulässigen Schadstoffkonzentrationen im an die Umgebung abgegebenen Abgas eines Verbrennungsmotors ist es nötig, Abgasreinigungsanlagen zu verwenden, die ihr Betriebsverhalten in Abhängigkeit z. B. von der Zusammensetzung des Abgases anpassen. Dies geschieht im Regelfall durch die Verwendung einer geregelten Abgasreinigungsanlage, die im Bereich z.B. der Katalysator-Trägerkörper einen Messfühler aufweist, dessen Signale zur Regelung der Abgasreinigungsanlage verwendet werden.

Bei der Herstellung eines solchen Wabenkörpers mit Befestigungsmöglichkeit für einen Messfühler am Wabenkörper waren bisher verschiedene zusätzliche Arbeitsschritte erforderlich. Nach einer Lochung eines Mantelrohres des Wabenkörpers wurde z. B. ein Flanschstück angesetzt, dass in einem zusätzlichen Arbeitsschritt mit dem Mantelrohr verbunden, insbesondere verschweißt werden musste. Dies bedingt zusätzliche Kosten bei der Herstellung solcher Wabenkörper.

Aus der DE 3116967 A ist ein Verfahren zum Verlöten eines Wickelkörpers mit einem Mantel bekannt. Gegenstand der dortigen Erfindung ist ein Arbeitsverfahren zum Verlöten eines gewickelten Metallträgers für Autoabgasreinigungskatalysatoren mit einem ihn umhüllenden Metallmantel, wobei der Mantel einen höheren Wärmeausdehnungskoeffizienten als der Wickelkörper hat. Dazu wird zunächst ein Metallstreifen mit der Breite der Wickelkörperlänge und mit der Länge des Wickelkörperumfangs zur gewünschten Mantelform gebogen. Anschließend wird auf den zu verbindenden Stellen von Mantel und Wickelkörper Lot aufgetragen. Der Mantel wird nach Einschieben des Wickelkörpers mittels ihn umgreifende Spannbacken an den Wickelkörper angedrückt, bevor die Anordnung im Ofen verlötet wird.

In der US 5 071 174 wird zudem noch ein Verfahren zur Befestigung eines Kupferrohrs an einem Stahlgehäuse beschrieben, wie es beispielsweise bei Klimageräten Anwendung findet. Die Öffnung im Stahlgehäuse ist dabei von einem abstehenden Kragen umfasst. Ein Kupferkragen mit zwei Abschnitten umschließt gleichzeitig den Kragen des Stahlgehäuses und das Kupferrohr. In einem sich verjüngenden Abschnitt des Kupferkragens wird nun Lot angeordnet, dass sich aufgrund der Kapillarwirkung zwischen Gehäuse, Kragen und Rohr verteilt, wenn die Anordnung in einen Ofen thermisch behandelt wird.

Hiervon ausgehend ist es Aufgabe der Erfindung, ein Verfahren zum Herstellen eines Wabenkörpers mit Anschlussmöglichkeit für einen Messfühler anzugeben, das mit möglichst wenigen Arbeitsschritten auskommt und kostengünstig ist, sowie einen dementsprechend gestalteten Wabenkörper anzugeben.

Diese Aufgabe wird erfindungsgemäß durch ein Verfahren mit den Merkmalen des Anspruchs 1 und einen Wabenkörper mit den Merkmalen des Anspruchs 11 gelöst. Weitere vorteilhafte Ausgestaltungen des Verfahrens und des Wabenkörpers sind Gegenstand der jeweils abhängigen Ansprüche und können einzeln oder in verschiedenen Kombinationen angewandt werden.

Das erfindungsgemäße Verfahren zum Herstellen eines Wabenkörpers mit einer Wabenstruktur, einem Mantelrohr und einem Flanschstück für einen Messfühler an dem Mantelrohr umfasst die folgenden Schritte:
a) Herstellen des Mantelrohrs aus einem Metallblech;
b) Einbringen eines von einem Lochrand berandeten Lochs an einer vorgegebenen Stelle in das Metallblech;
c) Anbringen des Flanschstückes an dem Lochrand im Mantelrohr;
d) Einbringen der Wabenstruktur in das Mantelrohr; und
e) Verbinden des Mantelrohres mit der Wabenstruktur und dem Flanschstück durch Löten, durchgeführt mit einem einzigen gemeinsamen Wärmebehandlungsprozess,
wobei die Schritte a), b) und c) in beliebiger Reihenfolge ausgeführt werden können.

Das Verfahren gestattet so die Herstellung eines Wabenkörpers mit einem Flanschstück für einen Messfühler in einem einzigen Wärmebehandlungsprozess. In dem gemeinsamen Wärmebehandlungsprozess werden die Blechlagen der Wabenstruktur mit dem Mantelrohr, das Flanschstück mit dem Mantelrohr und gegebenenfalls die Blechlagen der Wabenstruktur miteinander verbunden. Dies erspart einen weiteren Verarbeitungsschritt, bei dem das Flanschstück mit dem Mantelrohr verbunden wird.

Hierbei ist es erfindungsgemäß gleichgültig, ob die gegebene Reihenfolge der Schritte a) bis c) so eingehalten wird oder ob Teile des Verfahrens in einer anderen Reihenfolge ausgeführt werden. Beispielsweise ist es genauso vorteilhaft und erfindungsgemäß, ein von einem Lochrand berandetes Loch in das Metallblech einzubringen, bevor dieses zu einem Mantelrohr verformt wird.

Gemäß einer vorteilhaften Ausgestaltung des Verfahrens sind Lochrand und Flanschstück so gestaltet, dass sie vor und bei dem Wärmebehandlungsprozess zusammenbleiben. Dies kann beispielsweise dadurch geschehen, dass der Lochrand so ausgeformt ist, dass er mit dem Flanschstück eine federnde oder verrastende Verbindung eingeht. Dieses gewährleistet, dass durch die Federkraft oder Verrastung das Flanschstück am Mantelrohr gehalten wird. Dies ist speziell dann von Vorteil, wenn der Wabenkörper aufrecht stehend wärmebehandelt wird.

Zur Unterstützung des Zusammenhaltes von Mantelrohr und Flanschstück während der folgenden Handhabungsschritte und bei der Wärmebehandlung vor der endgültigen Verbindung sind auch verschiedene andere Maßnahmen einzeln oder in Kombination vorteilhaft einsetzbar. So ist mindestens eine Punktschweißung beim Aufsetzen des Flanschstückes ein einfaches und wirksames Mittel zur Vorfixierung. Auch das Aufsetzen einer insbesondere wiederverwendbaren Montageklammer ist vorteilhaft.

Gemäß einer weiteren vorteilhaften und ganz besonders bevorzugten Ausgestaltung des Verfahrens ist der Wärmebehandlungsprozess ein Lötprozess. Das Löten gehört zu einem der am weitesten verbreiteten Wärmebehandlungsprozesse beim Herstellen eines Wabenkörpers, so dass es besonders kostengünstig und fertigungstechnisch sinnvoll ist, das Verbinden des Flanschstücks mit dem Mantelrohr auch in einen vorhandenen Lötprozess zu integrieren. Erfindungsgemäß reicht ein einziger Lötprozess zur Verbindung des Flanschstücks mit dem Mantelrohr und zur Verbindung der Wabenstruktur mit dem Mantelrohr und gegebenenfalls der Blechlagen der Wabenstruktur miteinander.

Gemäß einer noch weiteren vorteilhaften Ausgestaltung des Verfahrens werden der Lochrand und/oder das Flanschstück vor oder nach dem Anbringen des Flanschstücks am Lochrand belotet. Dies gestattet eine sehr flexible Verfahrensführung, insbesondere die Berücksichtigung der Belotung des Flanschstücks und/oder des Lochrandes im Rahmen bereits existierender Verfahrensschritte.

Gemäß einer noch weiteren vorteilhaften Ausgestaltung des Verfahrens wird das Lot als Lotpulver, Lotpaste oder Lotfolie, bevorzugt Lotpulver oder Lotfolie, besonders bevorzugt Lotpulver aufgetragen. Je nach Ausbildung des Flanschstücks bzw. des Lochrandes kann so individuell jeweils die Form des Lotes gewählt werden, die in diesem Fall für das Beloten des Lochrandes und/oder des Flanschstücks am besten geeignet ist. Auch ergeben sich vielfältige Möglichkeiten bei der Kombination der Art des Lotes mit dem Zeitpunkt des Auftragens des Lotes. Gegebenenfalls muss bei der Verwendung z.B. von Lotpulver noch ein weiterer Schritt, wie das Anbringen einer Leim- und/oder Passivierungsschicht an einem der beiden Bauteile berücksichtigt werden. Je nach Art der Herstellung des Loches kann es auch erforderlich sein, zunächst eine Bearbeitung des Lochrandes vorzunehmen, um diesen für die weiteren Schritte vorzubereiten. Dies kann insbesondere ein Entgraten, ein Glätten oder eine Oberflächenbehandlung zur Verbesserung des Lötvorganges sein.

Gemäß einer noch weiteren vorteilhaften Ausgestaltung des Verfahrens weist die Wabenstruktur ein freies Volumen zur Aufnahme des Messfühlers auf. Dies ermöglicht die direkte Herstellung eines Wabenkörpers, in dem der Messfühler integriert ist. Hierbei korrespondieren Flanschstück und freies Volumen im Inneren des Wabenkörpers so, dass der Messfühler durch das Flanschstück in den Wabenkörper eingebracht wird. Der Messfühler wird mit dem Flanschstück verbunden, beispielsweise durch Schrauben oder Klemmen, und ragt dann in die Wabenstruktur hinein.

Gemäß einer noch weiteren vorteilhaften Ausgestaltung des Verfahrens wird das Loch in das Mantelrohr durch eine Aushalsung eingebracht. Dies ermöglicht ohne einen weiteren Arbeitsschritt die Ausbildung einer federnden Verbindung zwischen Flanschstück und Mantelrohr, da die aufgebogenen Enden der Aushalsung als Federelemente wirken. Hierdurch wird in vorteilhafter Weise vermieden, dass das Flanschstück und das Mantelrohr sich vor der Verbindung beispielsweise durch Löten oder Schweißen trennen können. Durch die Ausbildung der Aushalsung wird also verhindert, dass das Flanschstück vom Mantelrohr abfällt. Dies ist auch gewährleistet, wenn der Wabenkörper aufrecht transportiert und/oder gelötet wird.

Gemäß einer weiteren vorteilhaften Ausgestaltung des Verfahrens wird das Flanschstück über die Aushalsung gesteckt und dann mit dieser verbunden. Durch die Federkraft der aufgebogenen Enden der Aushalsung wird das Flanschstück durch die Kraftwirkung vom innen nach außen fixiert.

Gemäß einer noch weiteren vorteilhaften Ausgestaltung des Verfahrens wird das Flanschstück in die Aushalsung gesteckt und dann mit dieser verbunden. In diesem Fall wirkt die Federkraft der aufgebogenen Enden der Aushalsung von außen nach innen. Auch durch eine solche Anordnung ist bei entsprechender Ausgestaltung des Flanschstücks eine Fixierung des Flanschstücks am Mantelrohr gegeben.

Gemäß einem weiteren Aspekt des Erfindungsgedankens wird ein Wabenkörper mit einer Wabenstruktur, einem Mantelrohr mit einem von einem Lochrand berandeten Loch für ein Flanschstück für einen Messfühler vorgeschlagen, wobei das Flanschstück mit dem Lochrand verlötet ist. Ein solcher Wabenkörper ist kostengünstig herstellbar und ermöglicht in vorteilhafter Weise die Verbindung eines Messfühlers mit dem Mantelrohr, indem der Messfühler mit dem am Mantelrohr befestigtem Flanschstück verbunden wird. Darüber hinaus weist der erfindungsgemäße wabenkörper einen das Loch umgebenden Aushalsungsbereich auf. Hierbei ist es vorteilhaft, wenn das Flanschstück zumindest teilweise um oder in den Aushalsungsbereichs greift nach Art einer Steckverbindung, da dies die Herstellung und genaue Positionierung erleichtert. Ein solcher Wabenkörper kann in vorteilhafter Weise mit einem Messfühler versehen und im Abgassystem einer Verbrennungsmaschine, beispielsweise eines Automobils, eingesetzt werden.

Weitere Vorteile und besonders bevorzugte Ausgestaltungen der Erfindung werden nachfolgend anhand der Zeichnung näher erläutert, wobei die Erfindung nicht auf die dargestellten Ausführungsformen beschränkt ist. Es zeigen:
- **Fig. 1**: ein erstes Ausführungsbeispiel eines erfindungsgemäßen Wabenkörpers;
- **Fig. 2**: ein erfindungsgemäßes mit einem Mantelrohr verbundenes Flanschstück im Detail;
- **Fig. 3**: eine Vergrößerung der Verbindung zwischen Flanschstück und einem Lochrand;
- **Fig. 4**: ein zweites Ausführungsbeispiel eines erfindungsgemäßen Wabenkörpers; und
- **Fig. 5**: ein Beispiel der Erstellung eines freien Volumens zur Aufnahme eines Messfühlers.

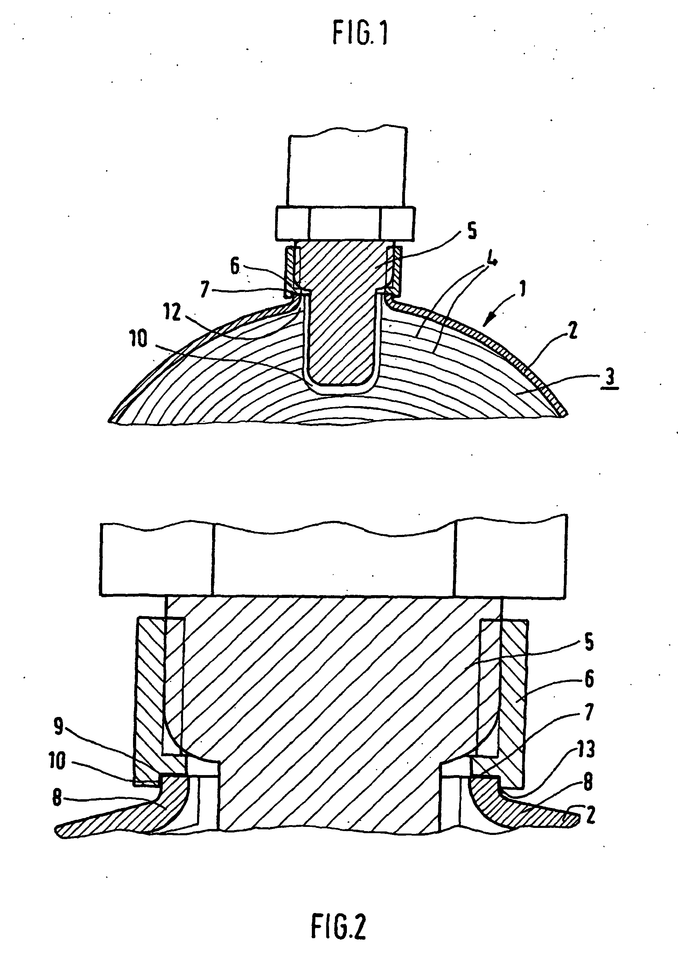

Fig. 1 zeigt einen Wabenkörper 1, der ein Mantelrohr 2 und eine Wabenstruktur 3 aufweist. Die Wabenstruktur 3 besteht aus Blechlagen 4, die zumindest teilweise so strukturiert sind, dass ein für ein Fluid durchströmbares Volumen entsteht. Der Übersichtlichkeit halber wurden die Strukturen der Blechlagen 4 in der Zeichnung weggelassen. In den Wabenkörper 1 ist ein Messfühler 5 eingebracht, der in einem Flanschstück 6 fixiert ist. Dieses Flanschstück 6 ist mit dem Lochrand 7 eines in das Mantelrohr 2 eingebrachten Lochs 12 verbunden. Die Wabenstruktur 3 weist ein von Blechlagen 4 freies Volumen 11 auf, das zur Aufnahme des Messfühlers 5 dient.

Das freie Volumen 11 kann auf verschiedene Art und Weise hergestellt werden. beispielsweise können die Löcher vor oder auch nach dem Stapeln bzw. Wickeln durch alle bekannten Trenntechniken, beispielsweise Senkerodieren, Laserschneiden, Wasserstrahlscheiden oder ähnliches eingebracht werden. Zudem ist es auch möglich, beim Aufbau der Wabenstruktur 3 aus unterschiedlichen Stapeln zumindest einen dieser Stapel axial zu trennen. Fig. 5 zeigt hierfür ein Beispiel. Die Wabenstruktur 3 ist durch das Verschlingen von drei Stapeln aufgebaut, die jeweils aus einer Mehrzahl von abwechselnd gestapelten glatten Blechlagen 14 und gewellten Blechlagen aufgebaut werden. Der Übersichtlichkeit halber sind nur die glatten Blechlagen 14 gezeigt. Im vorliegenden Beispiel besteht die Wabenstruktur 3 aus drei Stapeln, die gleichförmig miteinander verschlungen werden. Ein Stapel 15 ist in axialer Richtung in einen ersten Teilstapel 16 und einen zweiten Teilstapel 17 aufgeteilt, die axial voneinander beabstandet sind, wodurch ein freies Volumen 11 entsteht, welches zur Aufnahme eines nicht gezeigten Messfühlers dient. Auf diese Weise ist es in einfacher Weise möglich, ein freies Volumen 11 zu schaffen, ohne beispielsweise einen weiteren Bearbeitungsschritt nach dem Verwinden der Blechstapel durchführen zu müssen.

Fig. 2 zeigt einen vergrößerten Ausschnitt aus Fig. 1, in der Details der Verbindung des Flanschstücks 6 mit dem Lochrand 7 dargestellt sind. Das Loch 12 ist durch einen Aushalsungsbereich 8 gebildet, in dem das Mantelrohr 2 ausgehalst ist. Über diesen Aushalsungsbereich 8 ist das Flanschstück 6 gesteckt. Bevor das Flanschstück 6 aufgesteckt wird, kann gegebenenfalls noch eine Bearbeitung, insbesondere Entgratung oder Glättung des Lochrands 7 erfolgen.

Die Enden des Aufhalsungsbereichs 8 wirken als Federelemente, die das entsprechend ausgeformte Flanschstück 6 vor und während des Wärmebehandlungsprozesses, bevorzugt einem Lötprozess, fixieren. Der mit dem so am Aushalsungsbereich 8 fixierten Flanschstück 6 versehene Wabenkörper 1 kann so zwischen den Produktionsschritten des Aufsteckens des Flanschstücks 6 und dem Durchführen des Lötprozesses z. B. transportiert und gelagert werden, ohne dass sich das Flanschstück 6 vom Mantelrohr 2 trennt oder auch seine Lage in Bezug auf das Mantelrohr 2 verändert. Auch das Löten kann aufrecht, also mit seitlich abstehendem Flanschstück 6 erfolgen, ohne dass sich die Lage des Flanschstücks 6 relativ zum Mantelrohr 2 verändert. Dies gewährleistet eine gute Lötverbindung zwischen Flanschstück 6 und Lochrand 7 im Mantelrohr 2 auch bei aufrechter Lötung. Falls fertigungstechnisch erforderlich kann auch eine Vorfixierung des Flanschstückes 6 am Mantelrohr 2 erfolgen, beispielsweise durch eine Punktschweißung 13 oder eine Montageklammer.

Vor oder nach dem Aufstecken wird Lot 9 am Lochrand 7 und/oder der korrespondierenden Auflagefläche 10 des Flanschstücks 6 aufgetragen. Nach einem gemeinsamen Lötprozess ist das Flanschstück 6 mit dem Lochrand 7 dicht verbunden. Dieser Lötprozess ist derselbe, mit dem die Wabenstruktur 3 mit dem Mantelrohr 2 verbunden wird. Gegebenenfalls kann hierbei auch die Verbindung der Blechlagen 4 untereinander zur Wabenstruktur 3 erfolgen. Dies erspart einen Arbeitsschritt, der ohne das erfindungsgemäße Verfahren nötig wäre, um das Flanschstück 6 am Lochrand 7 zu befestigen. Dies bedingt eine Beschleunigung des Produktionsprozesses und führt zu einer Kostenersparnis bei der Massenproduktion von Wabenkörpern 1 mit Flanschstücken 6 zum Fixieren eines Messfühlers 5.

Nach Beendigung des Lötprozesses kann der Messfühler 5 in das Flanschstück 6 eingebracht werden. Der Messfühler 5 wird durch geeignete Mittel mit dem Flanschstück 6 verbunden, zum Beispiel in Form einer Schraub- oder Klemmverbindung. Bei dem Messfühler 5 kann es sich zum Beispiel um eine Lambda-Sonde oder einen Kohlenwasserstoff-Sensor (HC-Sensor) handeln.

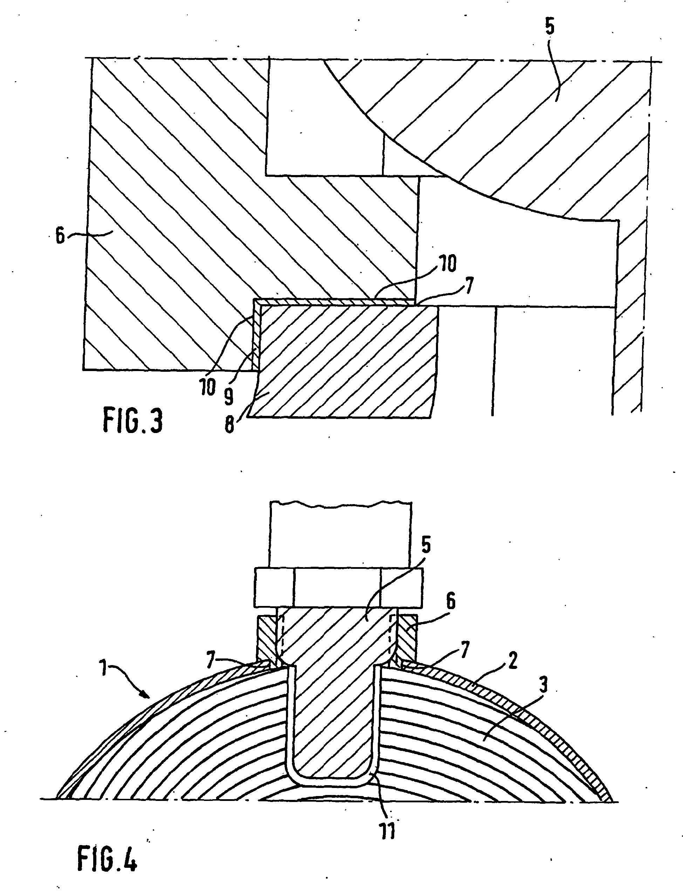

In Fig. 3 ist ein noch weiter vergrößerter Ausschnitt aus Fig. 2 gezeigt. Zwischen dem Lochrand 7 des Aushalsungsbereichs 8 und der Auflagefläche 10 des Flanschstücks 6 ist eine Lotschicht 9 zu erkennen, die nach dem Lötprozess das Flanschstück 6 mit dem Lochrand 7 verbindet. Das Lot 9 kann vor oder nach dem Aufstecken des Flanschstücks 6 auf den Aushalsungsbereich 8 auf den Lochrand 7 und/oder die Auflagefläche 10 bevorzugt in Form von Lotpulver, Lotfolie oder Lotpaste aufgetragen werden. Gegebenenfalls kann ein Aufbringen einer Leimschicht oder die Ausbildung einer Passivierungsschicht zur Verhinderung von unerwünschten Lötverbindungen in bestimmten Bereichen vor dem Auftragen des Lots erfolgen.

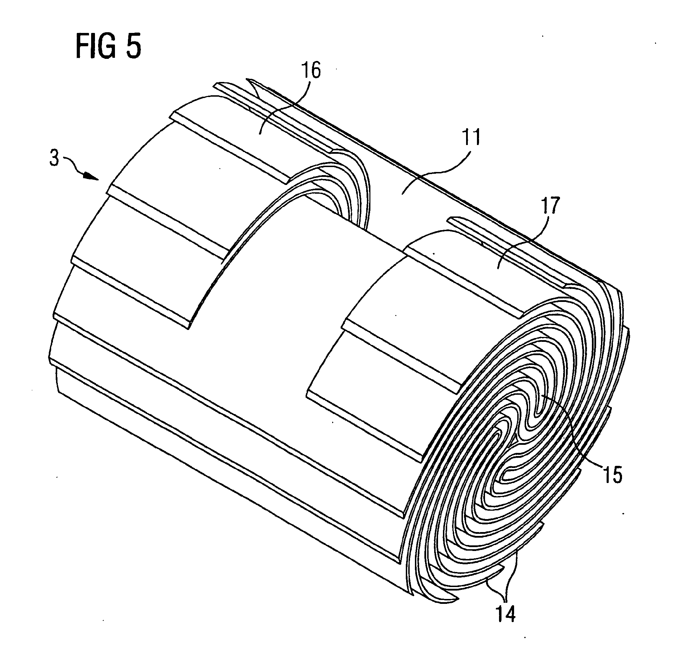

Fig. 4 zeigt einen Ausschnitt eines weiteren Ausführungsbeispiels eines erfindungsgemäßen Wabenköpers 1. Hier ist das Loch 12 mit Lochrand 7 nicht durch Ausbildung einer Aushalsung entstanden. Der Lochrand 7 oder die entsprechende (nicht eingezeichnete) Auflagefläche 10 des Flanschstücks 6 ist mit Lot 9 versehen worden. Nach Durchführung eines Lötprozesses kommt es zur Ausbildung einer Verbindung zwischen Flanschstück 6 und Lochrand 7. Die Wabenstruktur 3 weist ein freies Volumen 11 auf, das zur Aufnahme des Messfühlers 5 dient. Der Messfühler 5 wird mit dem Flanschstück 6 durch geeignete Mittel verbunden, beispielsweise in Form einer Schraub- oder Klemmverbindung.

Das erfindungsgemäße Verfahren gestattet auf vereinfachte Weise die Herstellung von Wabenkörpern 1, deren Mantelrohr 2 ein Flanschstück 6 zur Aufnahme eines Messfühlers 5 aufweist. Das Flanschstück 6 ist vor und bei einem Wärmebehandlungsprozeß so am Mantelrohr 2 fixiert, dass es nicht zu einer Lageveränderung des Flanschstücks 6 in Bezug auf das Mantelrohr 2 kommen kann, so dass es zur zuverlässigen Ausbildung einer Verbindung zwischen dem Flanschstück 6 und dem Mantelrohr 2 kommt.

### Bezugszeichenliste

- 1: Wabenkörper
- 2: Mantelrohr
- 3: Wabenstruktur
- 4: Blechlage
- 5: Messfühler
- 6: Flanschstück
- 7: Lochrand
- 8: Aushalsungsbereich
- 9: Lot
- 10: Auflagefläche
- 11: freies Volumen
- 12: Loch
- 13: Punktschweißung
- 14: glatte Blechlage
- 15: geteilter Stapel
- 16: erster Teilstapel
- 17: zweiter Teilstapel

## Patentansprüche

1. Verfahren zum Herstellen eines Wabenkörpers (1) mit einer Wabenstruktur (3), einem Mantelrohr (2) und einem Flanschstück (6) für einen Messfühler (5) an dem Mantelrohr (2), umfassend die folgenden Schritte:
a. Herstellen des Mantelrohrs (2) aus einem Metallblech;
b. Einbringen eines von einem Lochrand (7) berandeten Lochs (12) an einer vorgegebenen Stelle in das Metallblech;
c. Anbringen des Flanschstückes (6) an dem Lochrand (7) im Mantelrohr (2);
d. Einbringen der Wabenstruktur (3) in das Mantelrohr (2); und
e. Verbinden des Mantelrohres (2) mit der Wabenstruktur (3) und dem Flanschstück, durch Löten, durchgeführt mit einem einzigen, gemeinsamen Wärmebehandlungsprozess,
wobei die Schritte a), b), und c) in beliebiger Reihenfolge ausgeführt werden-können.

2. Verfahren nach Anspruch 1, **dadurch gekennzeichnet, dass** Lochrand (7) und Flanschstück (6) so gestaltet sind, dass sie vor und bei dem Wärmebehandlungsprozess zusammenbleiben.

3. Verfahren nach Anspruch 1 oder 2, **dadurch gekennzeichnet, dass** das Zusammenhalten von Lochrand (7) und Flanschstück (6) während der Handhabung vor dem endgültigen Verbindungsprozess durch mindestens eine Zusatzmaßnahme, insbesondere Punktschweißung (13), unterstützt wird.

4. Verfahren nach einem der vorhergehenden Ansprüche, **dadurch gekennzeichnet, dass** der Wärmebehandlungsprozess ein Lötprozess ist.

5. Verfahren nach Anspruch 4, **dadurch gekennzeichnet, dass** der Lochrand (7) und/oder das Flanschstück (6) vor oder nach dem Anbringen des Flanschstücks (6) am Lochrand (7) belotet werden.

6. Verfahren nach einem der Ansprüche 4 oder 5, **dadurch gekennzeichnet, dass** das Lot (9) als Lotpulver, Lötpaste oder Lötfolie, bevorzugt Lotpulver oder Lötfolie, besonders bevorzugt Lotpulver aufgetragen wird.

7. Verfahren nach einem der vorhergehenden Ansprüche, **dadurch gekennzeichnet, dass** die Wabenstruktur (3) ein freies Volumen (11) zur Aufnahme des Messfühlers (5) aufweist.

8. Verfahren nach einem der vorhergehenden Ansprüche, **dadurch gekennzeichnet, dass** das Loch durch eine Aushalsung eingebracht wird.

9. Verfahren nach Anspruch 8, **dadurch gekennzeichnet, dass** das Flanschstück (6) über die Aushalsung gesteckt und dann mit dieser verbunden wird.

10. Verfahren nach Anspruch 8, **dadurch gekennzeichnet, dass** das Flanschstück (6) in die Aushalsung gesteckt und dann mit dieser verbunden wird.

11. Wabenkörper mit einer Wabenstruktur (3), einem Mantelrohr (2) mit einem von einem Lochrand (7) berandeten Loch (12) für ein Flanschstück (6) für einen Messfühler (5), **dadurch gekennzeichnet, dass** das Flanschstück (6) mit dem Lochrand (7) verlötet ist, wobei
das Loch (12) von einem Aushalsungsbereich (8) umgeben ist.

12. Wabenkörper nach Anspruch 11, **dadurch gekennzeichnet, dass** das Flanschstück (6) den Aushalsungsbereichs (8) umgreift.

13. Wabenkörper nach Anspruch 11, **dadurch gekennzeichnet, dass** das Flanschstück (6) in den Aushalsungsbereichs (8) hineinragt.

## Claims

1. A process for producing a honeycomb body (1) having a honeycomb structure (3), a tubular casing (2) and a flange piece (6) for a measurement probe (5) on the tubular casing (2), comprising the following steps:
a. production of the tubular casing (2) from a metal sheet;
b. introduction of a hole (12), which is delimited by a rim (7), into the metal sheet at a predetermined location;
c. fitting of the flange piece (6) to the hole rim (7) in the tubular casing (2);
d. introduction of the honeycomb structure (3) into the tubular casing (2); and
e. joining of the tubular casing (2) to the honeycomb structure (3) and the flange piece by brazing, carried out using a single, common heat treatment process,
wherein the steps a), b) and c) can be carried out in any desired order.

2. The process as claimed in claim 1, **characterized in that** the hole rim (7) and flange piece (6) are configured in such a way that they remain together before and during the heat treatment process.

3. The process as claimed in claim 1 or 2, **characterized in that** at least one additional measure, in particular spot welding (13), is used to help to hold the hole rim (7) and flange piece (6) together during handling prior to the final joining process.

4. The process as claimed in one of the preceding claims, **characterized in that** the heat treatment process is a brazing process.

5. The process as claimed in claim 4, **characterized in that** brazing material is applied to the hole rim (7) and/or the flange piece (6) before or after the flange piece (6) is fitted to the hole rim (7).

6. The process as claimed in claim 4 or 5, **characterized in that** the brazing material (9) is applied as brazing material powder, brazing material paste or brazing material foil, preferably brazing material powder or brazing material foil, particularly preferably brazing material powder.

7. The process as claimed in one of the preceding claims, **characterized in that** the honeycomb structure (3) has a free volume (11) for receiving the measurement probe (5).

8. The process as claimed in one of the preceding claims, **characterized in that** the hole is introduced through a necked formation.

9. The process as claimed in claim 8, **characterized in that** the flange piece (6) is fitted over the necked formation and then joined to it.

10. The process as claimed in claim 8, **characterized in that** the flange piece (6) is fitted into the necked formation and then joined together.

11. A honeycomb body having a honeycomb structure (3), a tubular casing (2) with a hole (12) delimited by a rim (7) for a flange piece (6) for a measurement probe (5), **characterized in that** the flange piece (6) is brazed to the hole rim (7), wherein the hole (12) is surrounded by a necked region (8).

12. The honeycomb body as claimed in claim 11, **characterized in that** the flange piece (6) engages around the necked region (8).

13. The honeycomb body as claimed in claim 11, **characterized in that** the flange piece (6) projects into the necked region (8).

## Revendications

1. Procédé destiné à la fabrication d'un corps en nids d'abeilles (1) avec une structure en nids d'abeilles (3), un tube d'enveloppe (2) et une pièce de bride (6) pour un capteur (5) sur le tube d'enveloppe (2), comportant les étapes suivantes :
a. Fabrication du tube d'enveloppe (2) à partir d'une tôle métallique ;
b. introduction d'un trou (12), pourvu d'un bord de trou (7), à une position prédéterminée dans la tôle métallique ;
c. rapporter la pièce de bride (6) sur le bord de trou (7) dans le tube d'enveloppe (2) ;
d. introduction de la structure en nids d'abeilles (3) dans le tube d'enveloppe (2) ; et
e. liaison du tube d'enveloppe (2) à la structure en nids d'abeilles (3) et à la pièce de bride par brasage, effectué au moyen d'un seul processus de traitement thermique commun,
les étapes a., b. et c. pouvant être effectuées dans un ordre quelconque.

2. Procédé selon la revendication 1, **caractérisé en ce que** le bord de trou (7) et la pièce de bride (6) sont formés de manière telle, qu'ils restent ensemble avant et durant le processus de traitement thermique.

3. Procédé selon la revendication 1 ou 2, **caractérisé en ce que** la cohésion du bord de trou (7) et de la pièce de bride (6) durant la manipulation avant le processus de liaison final est soutenue par au moins une mesure supplémentaire, notamment par le soudage par points (13).

4. Procédé selon l'une des revendications précédentes, **caractérisé en ce que** le processus de traitement thermique est un processus de brasage.

5. Procédé selon la revendication 4, **caractérisé en ce que** le bord de trou (7) et/ou la pièce de bride (6) sont garnis de brasure avant ou après avoir rapporté la pièce de bride (6) sur le bord de trou (7).

6. Procédé selon l'une des revendications 4 ou 5, **caractérisé en ce que** le matériau de brasure (9) est appliqué comme poudre à braser, crème à braser ou feuille à braser, de préférence comme poudre à braser ou feuille à braser, plus préférablement comme poudre à braser.

7. Procédé selon l'une des revendications précédentes, **caractérisé en ce que** la structure en nids d'abeilles (3) a un volume libre (11) pour recevoir le capteur (5).

8. Procédé selon l'une des revendications précédentes, **caractérisé en ce que** le trou est introduit par une saillie.

9. Procédé selon la revendication 8, **caractérisé en ce que** la pièce de bride (6) est emboîtée sur la saillie et est ensuite reliée à celle-ci.

10. Procédé selon la revendication 8, **caractérisé en ce que** la pièce de bride (6) est emboîtée dans la saillie et est ensuite reliée à celle-ci.

11. Corps en nids d'abeilles avec une structure en nids d'abeilles (3), un tube d'enveloppe (2) avec un trou (12), pourvu d'un bord de trou (7) pour une pièce de bride (6) pour un capteur (5), **caractérisé en ce que** la pièce de bride (6) est brasée au bord de trou (7), le trou (12) étant entouré d'une région en saillie (8).

12. Corps en nids d'abeilles selon la revendication 11, **caractérisé en ce que** la pièce de bride (6) enveloppe la région en saillie (8).

13. Corps en nids d'abeilles selon la revendication 11, **caractérisé en ce que** la pièce de bride (6) s'étend dans la région en saillie (8).
